# EUROPEAN PATENT APPLICATION

(11) **EP 2 194 765 A1**
(43) Date of publication of application: **09.06.2010**
(21) Application number: 08740024.8
(22) Date of filing: 08.04.2008
(51) Int. Cl.: H05K 3/34, B23K 1/00, B23K 1/008, F27B 9/12, F27B 9/30, F27D 7/00, F27D 17/00

(54) **REFLOW FURNACE**

(30) Priority: 27.09.2007 JP 2007251115
(71) Applicant: Yasukawa Co., Ltd., Fukuoka 811-1132 (JP)
(72) Inventor: SUEYASU, Masakazu, Fukuoka-shi Fukuoka 811-1132 (JP)
(74) Representative: Haley, Stephen
(86) International application number: PCT/JP2008/056921
(87) International publication number: WO 2009/041099

(57) **Abstract**

A reflow furnace is provided in which a cleaning/cooling apparatus of exhaust gas is installed, so that even an indoor working environment is not affected, wherein clean exhaust having been cleaned and cooled is circulated in the furnace, so that a stable soldering process and efficient operation of the apparatus are achieved. A reflow furnace includes conveyance means for conveying a board having solder paste attached thereon, a heating furnace applying heat to the board passing therethrough by the conveyance means, an inlet port for sucking hot gas generated in the heating furnace, and a cooling apparatus for cleaning and cooling the sucked hot gas. A cooling zone 9 is arranged at a downstream side of the heating furnace in a conveyance line of the board, and a clean exhaust cooled by the cooling apparatus is circulated in a cooling zone.

## Description

### BACKGROUND OF THE INVENTION

### 1. Field of the Invention

The present invention relates to a reflow furnace, and more particularly, relates to a reflow furnace in which a cleaning/cooling apparatus of exhaust gas is installed, so that even an indoor working environment is not affected, wherein clean exhaust having been cleaned and cooled is circulated in the furnace, so that stable soldering process and efficient operation of the apparatus are achieved.

### 2. Description of the Related Art

The reflow furnace is used to solder an electronic component mounted on a circuit board with solder paste.

A printing machine prints the solder paste to predetermined positions on a print circuit board at which electronic components such as a semiconductor device, a capacitor, and a chip register are mounted. Then, this print circuit board is placed on a conveyer and conveyed to a reflow furnace, in which soldering process is performed to melt and paste the solder paste by heat of the reflow furnace.

In general, a rail continuously extending from the entrance to the exit of the furnace is arranged as conveyance means for conveying a print circuit board. The print circuit board is conveyed by a moving endless chain guided by this rail.

A technique described in Japanese Patent Application Laid-Open No. 2007-173410 is known as a technique relating to this kind of reflow furnace.
Patent Document 1: Japanese Patent Application Laid-Open No. 2007-173410

In the conventional reflow furnace, the entrance and the exit of the conveyer are in communication with the outside, and accordingly it is inevitable for heated gas to leak from the entrance and the exit. For this reason, there is a problem in that the working environment is harmed by the leaked heated gas in the indoor.

More particularly, the solder paste used to solder electronic components is viscous soldering material prepared by mixing flux and powder solder, and the flux is adjusted to have an appropriate viscosity by dissolving solid components such as a pine resin, a thixotropic agent, an activator in a solvent. Since the flux of the solder paste is evaporated when the flux is heated in the reflow furnace, the working environment may be contaminated by this evaporated gas.

Conventionally, this kind of heated gas is exhausted to the outside through a duct, but there is a problem in that it takes much labor and cost to install the exhaust duct.

### SUMMARY OF THE INVENTION

The present invention is made to solve the conventional problems, and it is an object of the present invention to provide a reflow furnace in which a cleaning/cooling apparatus of exhaust gas is installed, so that even an indoor working environment is not affected, wherein clean exhaust having been cleaned and cooled is circulated in the furnace, so that stable soldering process and efficient operation of the apparatus are achieved.

As means for achieving the above object, a reflow furnace according to a first aspect includes conveyance means for conveying a board having solder paste attached thereon, a heating furnace applying heat to the board passing therethrough by the conveyance means, an inlet port for sucking hot gas generated in the heating furnace, and a cooling apparatus for cleaning and cooling the sucked hot gas, wherein a cooling zone is arranged at a downstream side of a heating unit in a conveyance line of the board, and a clean exhaust cooled by the cooling apparatus is circulated in a cooling zone, and wherein the cooling apparatus includes a fine waterdrop generation apparatus for making cooling water stored therein into mist and spraying the mist, a mixing chamber in which the mist provided by the fine waterdrop generation apparatus is brought in contact with the introduced hot gas, and a gas/water separation device for generating the clean exhaust by separating water from the mixed mist.

The reflow furnace according to a second aspect is based on the reflow furnace according to the first aspect, wherein when a type of board conveyed to the reflow furnace is switched, the clean exhaust cooled by the cooling apparatus is circulated in the heating furnace.

The reflow furnace according to a third aspect is based on the reflow furnace according to the first aspect or the second aspect, wherein inlet ports are connected to an entrance side and an exit side of the reflow furnace for the board, and an entrance side cooling apparatus and an exit side cooling apparatus are arranged to respectively correspond to the inlet ports.

The reflow furnace according to a fourth aspect is based on the reflow furnace according to the first, the second, or the third aspect, wherein a clean exhaust discharged from the entrance side cooling apparatus and a clean exhaust discharged from the exit side cooling apparatus are circulated in the cooling zone.

In the present invention, the following effects can be obtained by employing the above structure.

According to the reflow furnace according to the first aspect, the cooling zone is arranged at the downstream side of the heating unit in the conveyance line of the board. Therefore, the board can be rapidly cooled right after the soldering process, and the effects such as making the crystalline structure finer, ensuring the crystalline strength, and improving the gloss on the surface can be obtained.

Further, the clean exhaust cooled by the cooling apparatus is circulated in a cooling zone. Therefore, the board can be efficiently cooled by reusing the exhaust.

The cooling apparatus includes a fine waterdrop generation apparatus for making cooling water stored therein into mist and spraying the mist, a mixing chamber in which the mist provided by the fine waterdrop generation apparatus is brought in contact with the introduced hot gas, and a gas/water separation device for generating the clean exhaust by separating water from the mixed mist. Therefore, the vaporized substances included in the hot gas such as flux are adsorbed more reliably by the fine waterdrops having a large contacting area. In the gas/water separation device subsequent thereto, the adsorbed substances and the clean exhaust are separated.

According to the reflow furnace according to the second aspect, the clean exhaust cooled by the cooling apparatus is circulated in the heating furnace. Therefore, when the board to be processed is switched, the board can be cooled down by introducing the clean exhaust into the heating furnace. Therefore, it is possible to swiftly switch to an appropriate temperature profile, and to reduce the time loss in switching operation.

According to the reflow furnace according to the third aspect, the inlet ports are connected to an entrance side and an exit side of the reflow furnace for the board, and an entrance side cooling apparatus and an exit side cooling apparatus are arranged to respectively correspond to the inlet ports. Therefore, the hot gas can be cleaned and cooled reliably by the two cooling apparatuses.

According to the reflow furnace according to the fourth aspect, both of a clean exhaust discharged from the entrance side cooling apparatus and a clean exhaust discharged from the exit side cooling apparatus are circulated in the forced cooling zone. Therefore, the clean exhausts of the two cooling apparatuses can be efficiently used.

### BRIEF DESCRIPTION OF THE DRAWINGS

Fig. 1 is a schematic side view of a reflow furnace;
Fig. 2 is an explanatory diagram showing the flow of current within the reflow furnace; and
Fig. 3 is a schematic explanatory diagram of a cooling apparatus.

### DESCRIPTION OF THE EMBODIMENTS

Best modes for carrying out a exhaust cooling apparatus of a reflow furnace according to the present invention will be hereinafter described with reference to the drawings.

### First Embodiment

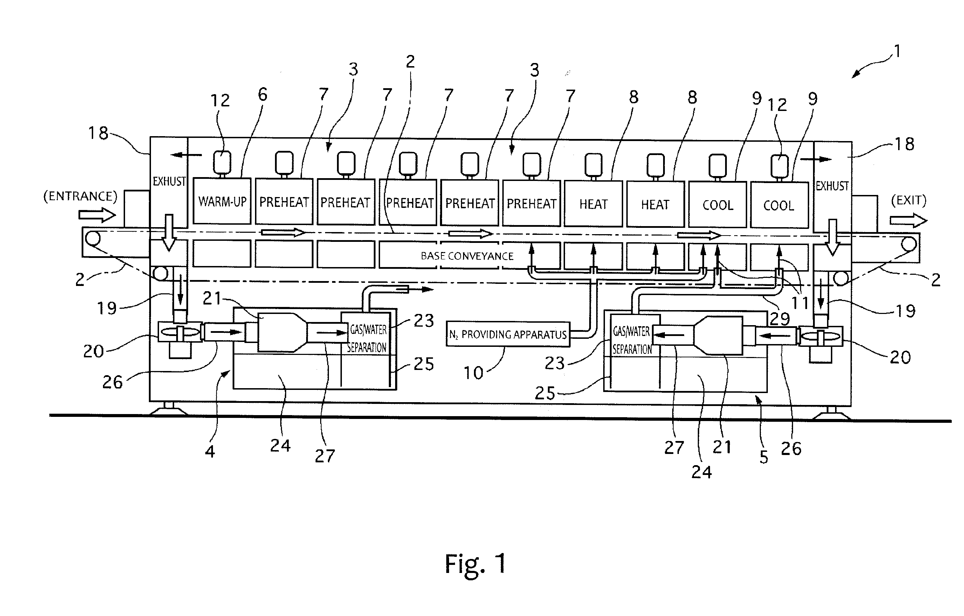

Fig. 1 is a side view schematically showing a structure of a reflow furnace according to the present invention. In Fig. 1, the reflow furnace 1 includes a chain conveyor 2 for carrying an electronic component mounted board to the reflow furnace 1 main body, a heating furnace 3 successively arranged along this chain conveyer 2, an entrance side cooling apparatus 4 for sucking, cleaning, and cooling the exhaust from the entrance side, and an exit side cooling apparatus 5 for sucking, cleaning, and cooling the exhaust from the exit side

The board conveyer 2 is so constructed to carry the boards from the left to the right of the figure at a predetermined dimensional unit by a control system. The electronic component mounted board conveyed in the reflow furnace by the chain conveyer 2 are sequentially heated by the heater, and the solder on the reflow surface is melted, so that the electronic components are soldered to the board.

In the heating furnace 3, a warm-up zone 6, a preheating zone 7, a heating zone 8, are arranged from the upstream side of the line of the conveyer, and a cooling zone 9 for the boards is connected to the downstream of the heating furnace. As shown in the figure, the width of each zone is as follows. On the conveyer, there are a warm-up zone (one section), a preheating zone (5 sections), a heating zone (2 sections), and a cooling zone (2 sections). However, the widths thereof may be appropriately set according to the size, the processing target, and the like of the reflow furnace.

In the warm-up zone 6 at the entrance section of the reflow furnace, heat is gradually applied to a board. The preheating zone 7 subsequent to the warm-up zone 6 gradually increases heat so as to alleviate a rapid heat shock that may occur during soldering process. The warm-up zone 6 and the preheating zone 7 enable to form solder balls in a good condition and avoid occurrence of bridges and the like, thus ensuring the stability of the soldering process.

The heating zone 8 has the highest temperature to melt solder and attach electronic chips onto the board. The solder paste is melted and the electronic components are attached while an N₂ providing device 10 provides nitrogen gas (N₂) in order to make an environment without oxygen in the heating zone 8.

In the cooling zone 9 subsequent to the heating zone 8, a clean exhaust 11 is injected to rapidly cool the board, so as to achieve the effects such as making the crystalline structure finer, ensuring the crystalline strength, and improving the gloss on the surface.

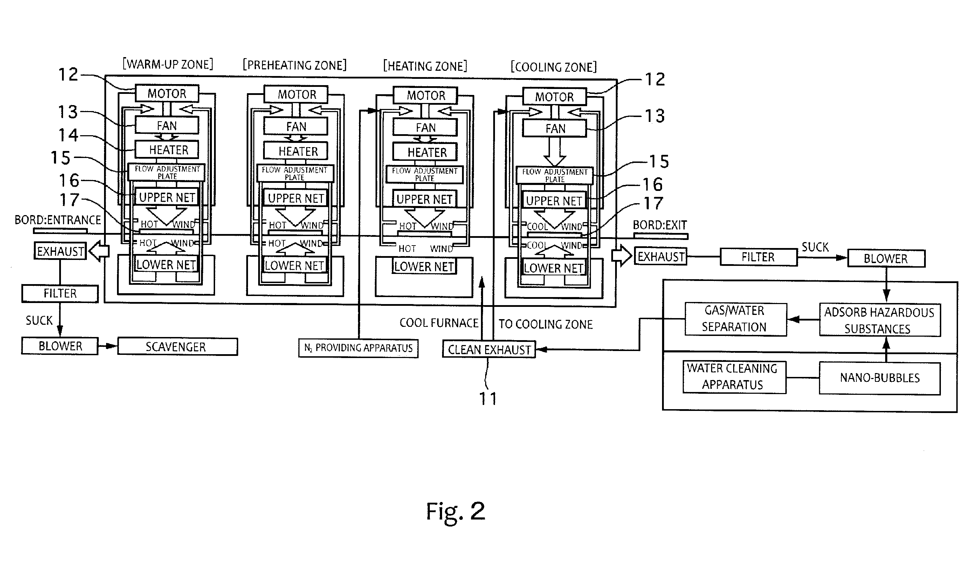

In the heating furnace 3 and the cooling zone 9, a fan 13 driven by a motor 12 is arranged above as shown in Fig. 2.

The heat given by the heater 14 is blasted downward by a fan 13 through a flow adjustment plate 15 and a net 16, and is emitted to a board 17. The hot wind blasted downward flows around the lower side of the board, and thereafter reaches the upper side via a circulation path. Then, the hot wind is blasted downward by the fan 13 again. In this way, the heat generated by the heater 14 is circulated within the furnace to heat the print circuit board 17 while the heat is blasted from the upper side to the down side.

In the heating zone 8, the hot wind is prevented from flowing around the lower side of the board, and is emitted to only the upper side, i.e., a surface of the board subjected to the soldering process.

In the cooling zone 9, the clean exhaust 11 is introduced, and is blasted to the board by the fan 13. The blasted clean exhaust is circulated around the lower side of the board, and thereafter reaches the upper side via a circulation path. Then, the clean exhaust is blasted downward by the fan 13 again.

Although in the heating furnace 3, hot gas in the furnace is circulated and used, a slight amount of hot gas in the inside leaks out through the carry-in entrance (entrance) and the exit of the print circuit board since the carry-in entrance (entrance) and the exit are in communication with the outside. Conventionally, these are discharged to the outside through a duct, but it takes a lot of trouble to install the discharge duct. For this problem, the cooling apparatus of the hot gas is arranged in the present invention, so that the hot gas is converted into a clean exhaust that does not affect the working environment even though the hot gas is discharged to the working place.

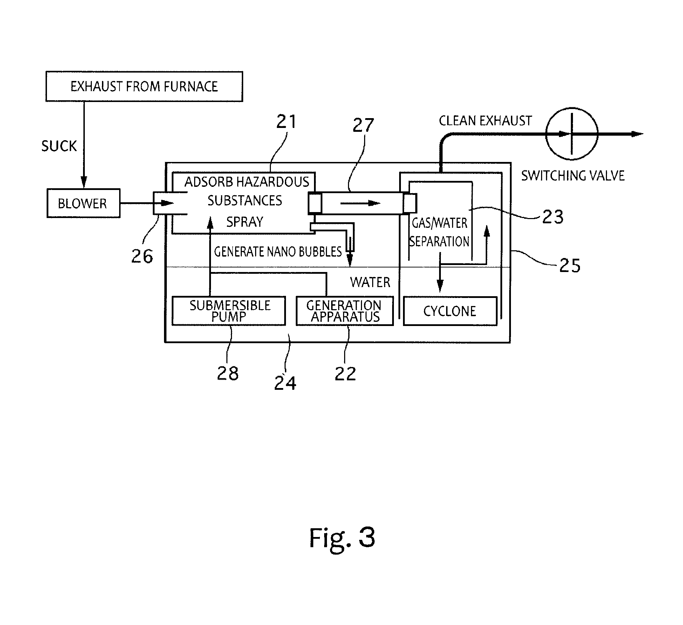

Two sets of the above cooling apparatuses are arranged at the entrance side and the exit side. As shown in Figs. 1 and 3, the cooling apparatus includes an inlet port 18 arranged on the entrance section and the exit section of the reflow furnace 1, a blower 20 for injecting hot gas via a duct 19 sucked through the inlet port 18, a mixing chamber 21 into which the hot gas sent from the blower 20 is introduced, a fine waterdrop generation apparatus 22 for injecting fine waterdrops into the mixing chamber 21, a gas/water separation device 23 for separating gas and water from mist in the mixing chamber 21, and a tank 25 for storing cooling water 24.

The inlet port 18 is arranged on the upper section of the entrance and the exit of the reflow furnace, and uses the pressure of the blower 20 to suck the hot gas leaking to the outside from the entrance and the exit.

An introduction pipe 26 for the hot gas is connected to one side of the mixing chamber 21. The other side of the mixing chamber 21 is a closed space having a series of hollow sections connected to a discharge pipe 27 in a mist form. In this example, the sucked hot gas comes in contact with fine waterdrops, and vaporized gases such as flux in the hot gas is adsorbed to the fine waterdrops. After the vaporized gases are adsorbed to the fine waterdrops, the hot gas is sent through the discharge pipe 27 to the gas/water separation device 23.

The fine waterdrop generation apparatus 22 includes a nozzle and a stream generation device, an ultrasonic processing device, or the like that is specialized for generating fine waterdrops, and makes the cooling water 24 sucked by a pump 28 into fine waterdrops and injecting the fine waterdrops into the mixing chamber 21. The waterdrops formed by this apparatus are made of particularly finer waterdrops than those sprayed from an ordinary nozzle generated by compression. The spray provided by the fine waterdrop generation apparatus 22 uniformly spreads to the entire mixing chamber 21, and is mixed with the introduced gas. For example, an apparatus described in Japanese Patent No. 3765759 can be employed as this fine waterdrop generation apparatus 22.

The adsorption method with the fine waterdrops is compared with a method of bringing the gas and the air into contact with each other by aeration in a water tank. In the adsorption method with the fine waterdrops, vaporized substances included in the gas are adsorbed more reliably since the size of the contacting area between the gas and the air is larger.

The gas/water separation device 23 separates the liquid from the mist sent from the mixing chamber. A cyclone-type apparatus using a centrifugal force to remove water is used as the gas/water separation device 23. The liquid component, from which the vaporized gas such as flux is adsorbed and removed, is brought back to the cooling water by the gas/water separation device 23, and only the gas (clean exhaust 11) is obtained and circulated in the cooling zone 9, or a portion thereof is discharged.

The tank 25 is integrally formed with the fine waterdrop generation apparatus and the gas/water separation device, and is made of corrosion-resistant metal such as aluminum and stainless steel. The tank 25 includes a water level confirmation window through which the water level of the cooling water 24 is confirmed or a water level detection device.

The fine waterdrop generation apparatus 22 is also arranged with a nozzle, not shown, for injecting water toward the cooling water 24. The nano-bubbles water injected through this nozzle collides with the cooling water 24, and the impact caused by the collision with the cooling water 24 is used to dissolve and remove the vaporized component melted in the cooling water, i.e., hazardous substances and odorous components.

The two cooling apparatuses 4 and 5 are arranged respectively at the entrance side and the exit side. However, the clean exhaust subjected to the cooling and cleaning processes performed by the cooling apparatus 4 at the entrance side is discharged into a frame constituting the outer case of the apparatus, so that the clean exhaust cools the entire apparatus from the outside, and thereafter the clean exhaust is discharged to the outside.

Since this clean exhaust 11 has been cleaned by the cooling apparatus 4, the clean exhaust 11 does not affect the working environment even when it is discharged to the indoor.

The clean exhaust 11 discharged from the cooling apparatus 5 at the exit side is circulated in the cooling zone by the introduction pipe 29, and is blasted onto the board 17 by the fan 13 of the cooling zone 9 so as to cool the board 17. Thereafter, a portion of the clean exhaust 11 is mixed with the hot gas, and sucked into the inlet port 18 again.

Therefore, the stream sucked through the inlet port 18 includes the hot gas and the circulated clean exhaust. The sucked stream passes through the mixing chamber 21 and the gas/water separation device 23. Then, a portion of the sucked stream is circulated and used, and another portion thereof is discharged out of the apparatus. This clean exhaust does not affect the working environment even when it is discharged to the working place since it has been cooled and cleaned.

Since the clean exhaust 11 is cooled by being brought in contact with the fine waterdrops, the clean exhaust 11 is maintained at a temperature lower than the external temperature, and a high cooling effect can be obtained compared with the introduction of the external air.

On the other hand, in the reflow furnace 1, it is necessary to process the print circuit board according to an appropriate temperature profile. The temperature profile is stored in a computer of a control apparatus in advance, and an appropriate heater setting temperature is maintained. Different temperature profiles are required according to various conditions such as the number of electronic components to be soldered.

In order to obtain an optimum temperature profile for soldering, a sample is passed through the reflow furnace to measure the temperature of the sample, and based on the measured data, the setting value of the heater temperature is corrected and changed. The optimum temperature profile is set by repeating the above operation or based on an experience value. In the past, a method of adjusting the amount of receiving heat by changing the conveyance speed of the board has been employed. However, this adjustment of conveyance speed alone cannot sufficiently support the detailed temperature profile setting.

In circumstances where production of a wide variety of products in small quantities is required due to the industrial structure, it is important to swiftly switch the board to be processed in view of the production efficiency. When switching the boards, it is possible to partially open the furnace in order to lower the temperature of the furnace. However, there is a problem in that the hot gas is diffused, and this entails, e.g., cumbersome operation performed upon stopping the line and cumbersome operation performed upon decomposing the apparatus.

Accordingly, in the present invention, the clean exhaust 11 of the cooling apparatus 5 is circulated to the heating furnace 3.

A clean exhaust introduction pipe (not shown) is extended from the exit side cooling apparatus 5 and is connected to the heating zone 8 of the heating furnace 3. In the heating zone 8, the clean exhaust is sent out from the upper section or the lower section. In the heating zone into which the clean exhaust is introduced, the clean exhaust is diffused by the fan, and the temperature in the inside is reduced.

The introduction pipe of the clean exhaust may be configured to emit the clean exhaust from one portion of the heating furnace 3. Alternatively, a plurality of introduction pipes may be arranged in the conveyance direction for each section set in the heating furnace 3, so that the clean exhaust 11 may be introduced into these introduction pipes at a time to achieve rapid cooling.

The introduction of the clean exhaust 11 into the heating furnace 3 can be performed by manipulating a switching valve, so that the clean exhaust, which was sent to the cooling zone 9, is now sent to the heating zone 8.

When the clean exhaust is introduced into the heating furnace 3, the soldering process in the reflow furnace is halted, but the cleaning apparatuses 4 and 5 operate to suck, through the inlet port, the discharged amount of the hot gas in the furnace according to the introduction of the clean exhaust, thus cooling and cleaning the furnace. A portion of the clean exhaust having been cooled and cleaned is discharged out of the apparatus, and another portion is circulated again.

As described above, cleaning of the hot gas and cooling down of the heating furnace can be quickly performed. Therefore, it takes a short time to set an appropriate temperature profile, and the apparatus can operate efficiently.

### Second Embodiment

Subsequently, a reflow furnace according to a second embodiment will be described.

In the first embodiment, the clean exhaust of the exit side cooling apparatus 5 is circulated in the cooling zone. In contrast, in the reflow furnace according to the second embodiment, not only the clean exhaust of the exit side cooling apparatus 5 but also the clean exhaust of the entrance side cooling apparatus 4 are circulated in the cooling zone.

In the reflow furnace according to the second embodiment, the exhaust tube for the clean exhaust 11 provided by the entrance side cooling apparatus 4 is joined with the introduction pipe 29, and the clean exhaust 11 is sent to the cooling zone 9 therethrough.

An increased amount of clean exhaust 11 is sent to the cooling zone 9, but the exit side cooling apparatus 5 sucks the increased amount thereof through the inlet port. After it is sucked, a portion thereof is circulated in the cooling zone 9 again, and the remaining portion thereof is discharged out of the apparatus.

The cooling down operation of the heating furnace 3 is performed in the same manner as the first embodiment. Namely, the switching valve is manipulated, so that the clean exhaust 11, which was sent to the cooling zone 9, is now sent to the preheating zone 7 and the heating zone 8.

In the reflow furnace according to the present embodiment, the clean exhausts provided by the two cooling apparatuses can be efficiently used, and the hot gas can be reliably cleaned and cooled.

Subsequently, the effect of the present invention will be described.

A print circuit board having solder paste attached thereon is conveyed by the conveyance conveyer 2 through the warm-up zone 6, the preheating zone 7, and the heating zone 8. In the warm-up zone 6 and the preheating zone 7, the print circuit board is gradually heated to alleviate the heat shock. In the heating zone 8, the solder is melted and adsorbed.

In the cooling zone 9 arranged downstream of the heating zone 8, the clean exhaust 11 provided by the cooling apparatus 5 is injected by the fan, so as to cool the print circuit board having been subjected to the soldering process. Since the print circuit board is rapidly cooled, the effects such as making the crystalline structure finer, ensuring the crystalline strength, and improving the gloss on the surface can be obtained.

In the heating furnace 3, the components included in the flux are evaporated by heat, and the evaporated substance leaks out of the entrance and the exit of the conveyance conveyor of the heating furnace. However, the inlet ports 18 arranged at the entrance and the exit suck this hot gas.

In the cooling apparatuses 4 and 5, the sucked evaporated gas comes in contact with fine waterdrops, and is cooled and removed. A portion thereof is discarded, and another portion thereof is circulated in the cooling zone 9.

Since the circulated clean exhaust 11 is cooled, the clean exhaust 11 can be maintained at a temperature lower than the outside temperature, and the board having been subjected to the soldering process can be efficiently cooled.

In the reflow furnace according to the second embodiment, not only the clean exhaust discharged from the entrance side cooling apparatus 4 but also the clean exhaust discharged from the exit side cooling apparatus 5 are circulated in the cooling zone. Therefore, the clean exhausts of the two cooling apparatuses can be effectively used, and the hot gas can be in a more reliable manner cleaned and cooled.

In order to switch the boards to be processed, while the conveyer unit is halted, the heater unit is halted and the clean exhaust 11 is introduced into the heating furnace 3. Accordingly, the furnace is cooled down, and the switching of the setting of the temperature profile can be performed appropriately in a short time.

The embodiments of the present invention have been described above. However, the specific structures of the invention are not limited to the above-mentioned embodiments. It is understood that changes in design within the scope of the gist of the invention are included in the present invention.

For example, the present invention includes a case where a mechanism such as an electric cooler is employed and attached to the cooling apparatuses 4, 5, so that the cooling water is always maintained at a low temperature.

### DESCRIPTION OF REFERENCE NUMERALS

- 1: REFLOW FURNACE
- 2: CONVEYER
- 3: HEATING FURNACE
- 4: COOLING APPARATUS
- 5: COOLING APPARATUS
- 6: WARM-UP ZONE
- 7: PREHEATING ZONE
- 8: HEATING ZONE
- 9: COOLING ZONE
- 10: N₂ PROVIDING APPARATUS
- 11: CLEAN EXHAUST
- 12: MOTOR
- 13: FAN
- 14: HEATER
- 15: FLOW ADJUSTMENT PLATE
- 16: UPPER NET
- 17: BOARD
- 18: INLET PORT
- 19: DUCT
- 20: BLOWER
- 21: MIXING CHAMBER
- 22: FINE WATERDROP GENERATION APPARATUS
- 23: GAS/WATER SEPARATION DEVICE
- 24: COOLING WATER
- 25: TANK
- 26: INTRODUCTION PIPE
- 27: DISCHARGE PIPE
- 28: PUMP
- 29: INTRODUCTION PIPE

## Claims

1. A reflow furnace comprising conveyance means for conveying a board having solder paste attached thereon, a heating furnace applying heat to the board passing therethrough by the conveyance means, an inlet port for sucking hot gas generated in the heating furnace, and a cooling apparatus for cleaning and cooling the sucked hot gas,
wherein a cooling zone is arranged at a downstream side of a heating unit in a conveyance line of the board, and a clean exhaust cooled by the cooling apparatus is circulated in the cooling zone, and
wherein the cooling apparatus includes a fine waterdrop generation apparatus for making cooling water stored therein into mist and spraying the mist, a mixing chamber in which the mist provided by the fine waterdrop generation apparatus is brought in contact with the introduced hot gas, and a gas/water separation device for generating the clean exhaust by separating water from the mixed mist.

2. The reflow furnace according to claim 1, wherein when a type of board conveyed to the reflow furnace is switched, the clean exhaust cooled by the cooling apparatus is circulated in the heating furnace.

3. The reflow furnace according to claim 1 or 2, wherein inlet ports are connected to an entrance side and an exit side of the reflow furnace for the board, and an entrance side cooling apparatus and an exit side cooling apparatus are arranged to respectively correspond to the inlet ports.

4. The reflow furnace according to claim 1, 2, or 3, wherein a clean exhaust discharged from the entrance side cooling apparatus and a clean exhaust discharged from the exit side cooling apparatus are circulated in the cooling zone.
